Europäisches Patentamt

European Patent Office

Office européen des brevets

(11) Publication number: **0 265 075 B1**

# EUROPEAN PATENT SPECIFICATION

(45) Date of publication of patent specification: **13.11.91**

(51) Int. Cl.⁵: **C08L 23/10**, C08L 53/00, C08L 23/16, C08K 3/34, C08K 3/30, C08K 3/26, //(C08L53/00,23:16,C08K3:26, 3:30,3:34)

(21) Application number: **87308263.0**

(22) Date of filing: **18.09.87**

(54) **Polypropylene resin composition.**

(30) Priority: **13.10.86 JP 241388/86**

(43) Date of publication of application:
**27.04.88 Bulletin 88/17**

(45) Publication of the grant of the patent:
**13.11.91 Bulletin 91/46**

(84) Designated Contracting States:
**DE FR GB IT**

(56) References cited:
EP-A- 0 007 639
EP-A- 0 200 340
DE-A- 1 694 914
GB-A- 2 143 831
LU-A- 54 950

(73) Proprietor: **MITSUI TOATSU CHEMICALS, Inc.**
**2-5 Kasumigaseki 3-chome**
**Chiyoda-Ku Tokyo 100(JP)**

Proprietor: **HONDA GIKEN KOGYO KABUSHIKI KAISHA**
**1-1, 2-chome Minami-Aoyama**
**Minato-ku Tokyo(JP)**

(72) Inventor: **Abe, Masaru**
**1541, Yabecho Totsuka-ku**
**Yokohama-shi Kanagawa-ken(JP)**
Inventor: **Kawai, Yoichi**
**1541, Yabecho Totsuka-ku**
**Yokohama-shi Kanagawa-ken(JP)**
Inventor: **Sekiguchi, Katsumi**
**2070, Iijimacho Sakae-ku**
**Yokohama-shi Kanagawa-ken(JP)**
Inventor: **Komatsu, Yasunori**
**2-3-16, Yamato**
**Utsunomiya-shi Tochigi-ken(JP)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Inventor: **Aoki, Osamu**
**386, Minecho**
**Utsunomiya-shi Tochigi-ken(JP)**
Inventor: **Adachi, Ryohei**
**1-5, Rokudocho**
**Utsunomiya-shi Tochigi-ken(JP)**

(74) Representative: **Harvey, David Gareth et al**
**Graham Watt & Co. Riverhead**
**Sevenoaks Kent TN13 2BN(GB)**

## Description

This invention relates to a polypropylene resin composition having excellently-balanced physical properties of high stiffness and high impact resistance, excellent paintability, small linear expansion coefficient and secondary shrinkage, and good scratch resistance even in an uncoated stated.

Polypropylene resin has been used widely for many years in various fields owing to its excellent properties such as light specific gravity, high stiffness and good chemical resistance. However, its impact resistance is poor at low temperatures. Attempts have been made to improve its impact resistance by incorporating a thermoplastic elastomer such as an ethylene-propylene copolymer rubber (hereinafter called "EPR") or ethylene-propylene-diene terpolymer rubber (hereinafter called "EPDM").

It is also common practice to add an inorganic filler to polypropylene resin so as to improve its various properties such as stiffness, heat resistance, dimensional stability and paintability.

It is also routine these days to add one or more of various thermoplastic elastomers together with an inorganic filler to polypropylene resin so as to obtain a polypropylene resin composition having well-balanced properties of for instance stiffness, paintability and impact resistance. Under the circumstances, it is required to have mutually-contradictory physical properties, e.g., high impact resistance along with high stiffness, high heat resistance, excellent paintability and high molding flowability. Moreover, each of these properties is required to be exhibited at a high level. A variety of proposals have been made for these purposes. Such proposals seem to provide sufficient data for some of such requirements but are still believed to be insufficient in the remaining properties. They are hence insufficient to satisfy the high level of balancing in physical properties, which the market presently requires.

The present inventors have already devised polypropylene resin compositions possessing improvements over the aforementioned drawbacks, which exhibit excellent paintability, high stiffness, high molding flowability and high impact resistance. Such compositions are obtained by mixing in specific amounts a particular crystalline ethylenepropylene copolymer, an EPR having a specific composition and viscosity, talc and barium sulfate both having a specific particle size. See Japanese Patent Laid-Open No. 212452/1985 and Japanese Patent Application No. 222824/1985 corresponding to Japanese Patent Laid-Open No. 84142/1987.

If these compositions are utilised for making parts such as exterior automotive trim plates and are either uncoated or only coated partly, their uncoated surface areas have low scratch resistance. In addition, their linear expansion coefficients are considerably greater than vehicle bodies. Problems are thus encountered when such components are mounted on vehicle bodies, and they have a further drawback that their secondary shrinkage is great.

This invention seeks to provide a polypropylene resin composition having good scratch resistance, improved linear expansion coefficient and secondary shrinkage factor, excellent paintability, and high stiffness, molding flowability and impact resistance.

According to the present invention, there is provided a polypropylene resin composition comprising:

(a) 40 - 80 wt.% of a crystalline ethylenepropylene block copolymer having an ethylene content of 3 - 30 wt.% and a melt flow index (MI) of at least 4 g/10 min at 230° C;

(b) 30 - 10 wt.% of an EPR and/or an EPDM, each of said EPR and/or said EPDM having a propylene content of 10 - 90 wt.% and a Mooney viscosity

$$(\mathrm{ML}^{100°C}_{1+4})$$

of 15 - 110;

(c) 2 - 25 wt.% of talc which has been treated with a surface treatment agent while being pulverized in a dry or semi-dry grinding mill;

(d) 2 - 25 wt.% of barium sulfate having an average particle size not greater than 1 $\mu$m;

(e) 1 - 10 wt.% of prismatic or acicular calcium carbonate having an average particle size not greater than 5 $\mu$m and an aspect ratio of at least 2.5; and

(f) 0.01 - 0.5 wt.% of a nucleating agent;

all the weight percentages being based on the total amount of the components (a) - (e) and the total amount of talc, barium sulfate and calcium carbonate being 5 - 35 wt.% of the total amount of the components (a) - (e).

The invention will now be explained more fully in the following description, which is given by way of example only.

3

The component (a) useful in the practice of this invention is a crystalline-propylene block copolymer having an ethylene content of 3 - 30 wt.% and an MI of at least 4 g/10 min. If the ethylene content is less than 3 wt.%, the resulting composition has reduced impact resistance and paintability. Any ethylene contents greater than 30 wt.% lower the stiffness. Moreover, such polypropylene resins have poor productivity and hence lead to high production costs. Ethylene contents outside the above-specified range are therefore undesirable. Melt indexes lower than 4 g/10 min are not preferred because the resulting compositions have reduced flowability.

The component (b) useful in the practice of this invention is EPR, EPDM or a mixture thereof, which has a propylene content of 10 - 90 wt.% and a Mooney Viscosity

$$(ML_{1+4}^{100°C})$$

of 15 - 110. Propylene contents lower than 10 wt.% result in the production of compositions of reduced impact resistance, whereas propylene contents greater than 90 wt.% lead to the production of molded articles having poor appearance and difficulties in handling are encountered. Propylene contents outside the above-specified range are therefore impractical.

If EPR or EPDM the Mooney viscosity of which is lower than 15 or higher than 110 is added to the above-mentioned crystalline ethylene-propylene copolymer, the particle sizes of the dispersed rubber components are either too small or too large so that molded articles having poorly-balanced physical properties are obtained. Moreover, Mooney viscosities lower than 15 lead to the formulation of compositions of reduced paintability and the production of molded articles of poor external appearance, while Mooney viscosities higher than 110 result in the provision of compositions of reduced flowability and poor moldability. Mooney viscosities outside the above-specified range are therefore not preferred.

Illustrative examples of the diene useful as the third component of EPDM include ethylidenenorbornane, dicyclopentadiene and 1,4-hexadiene.

The component (c) useful in the practice of this invention is talc which has been surface-treated by pulverizing raw talc together with a surface treatment agent in a dry or semi-dry grinding mill or has been surface-treated with a surface treatment agent in the above grinding mill. Such talc can be obtained, for example, by charging raw talc and a surface treatment agent, which may be selected from organic silane or titanium base coupling agents, various surfactants, silicone oils, various silanes, metallic soaps, higher alcohols, polyolefins, unsaturated carboxylic acid modified polyolefins and the like, in a grinding mill either after mixing them in advance or separately, and then pulverizing them to effect a simultaneous surface treatment of the talc. Regarding the proportions of the talc and surface treatment agent, it is generally preferred to employ about 0.01 - 5 parts by weight of the surface treatment agent per 100 parts by weight of the talc. 0.01 part by weight or more is preferred from the viewpoint of enhancing the effects of the surface treatment. On the other hand, 5 parts by weight or less is preferred from the viewpoint of improving the balancing among physical properties of the resulting resin composition such as its stiffness, impact resistance, heat resistance and surface characteristics. Proportions greater than 5 parts by weight may result in reductions in stiffness, impact resistance and the like, and moreover leads to a higher production cost. It is therefore not preferred to have the surface treatment agent present in any proportions outside the above-specified range.

Any grinding mill may generally be used so long as it can perform fine pulverization and micro-pulverization in a dry or semi-dry state. As exemplary grinding mills, may be mentioned grinding mills such as micron mill, jet-stream grinding mill, ball mill, micronizer, turbo-mill and atomizer. A jet-stream grinding mill of the micronizer, reductionizer, impact, opposed flow or fluidized bed type is preferred in view of grinding efficiency, grinding time, working convenience and efficiency. These pulverizers are well-known in the art. Among these, a fluidized-bed jet-stream grinding mill is particularly preferred since it can apply the surface treatment evenly.

Use of such talc can provide a molded article having not only highly-improved scratch resistance but also significantly-enhanced impact resistance.

The component (d) useful in the practice of this invention is barium sulfate having an average particle size not larger than 1.0 μm. Precipitated barium sulfate is desirable for its good surface characteristics. If barium sulfate having an average particle size greater than 1.0 μm is used, the resulting composition has reduced impact resistance and hence is not preferred.

The component (e) useful in the practice of this invention is prismatic or acicular calcium carbonate having an average particle size not greater than 5 μm and having an aspect ratio of at least 2.5. Use of calcium carbonate having an average particle size greater than 5 μm results in a composition of reduced impact resistance and a molded article of reduced scratch resistance and external appearance, so an average particle size greater than 5 μm is not preferred. If calcium carbonate having an aspect ratio smaller than 2.5 is used, the resulting product tends to show a somewhat-reduced linear expansion coefficient and lower scratch resistance. The calcium carbonate may be either heavy or light calcium carbonate. It may be used after applying a surface treatment to it, e.g. in the same manner as the surface treatment for the above-described talc. The application of such a surface treatment can bring about the same effects as the surface treatment of talc.

The average particle sizes of these inorganic fillers are Nussenstein's particle sizes determined by the light transmission method. Values obtained as 50% particle sizes respectively in their cumulative particle size distributions (called "$D_{50}$" generally) are used.

The mixing proportions of the components (a) - (e) are specified as described above for the following reasons. Proportions of the component (a) smaller than 40 wt.% result in compositions of reduced balancing of physical properties of stiffness and impact resistance while proportions greater than 80 wt.% lead to compositions of lowered impact resistance. Proportions outside the above-specified range are not preferred, therefore. If the proportion of the component (b) is smaller than 10 wt.%, the resulting compositions are of reduced impact resistance and paintability. If the proportion of the component (b) exceeds 30 wt.%, the stiffness is lowered. Proportions outside the above-specified range are not preferred, therefore. If the proportion of the component (c) is smaller than 2 wt.%, the resulting compositions are of reduced stiffness and scratch resistance. Proportions greater than 25 wt.% however result in reduced impact strength and in molded articles of impaired external appearance. If the proportion of the component (d) is smaller than 2 wt.%, the resulting composition is of reduced impact resistance and the resulting molded article is of impaired external appearance. Even if its proportion exceeds 25 wt.%, no substantial additional effects can be brought about for the improvement of the impact resistance, external appearance and stiffness, and the resulting composition has a greater specific gravity. Such a high proportion is therefore not very economical. If the proportion of the component (e) is smaller than 1 wt.%, the resulting product is of reduced scratch resistance and linear expansion coefficient. Proportions greater than 10 wt.% however result in products of unsatisfactory external appearance and also of lowered impact resistance. It is thus not preferable to use the component (e) in any proportions outside the above-specified range.

If the total proportion of the components (c), (d) and (e) is lower than 5 wt.%, the resulting composition is of reduced stiffness and poor scratch resistance, linear expansion coefficient and secondary shrinkage. On the other hand, total proportions of these greater than 35 wt.% lead to compositions of lowered impact resistance, unsatisfactory external appearance and lowered paintability. Blistering also takes place between the resin layer and the associated coating film due to moisture containing in the talc, barium sulfate and calcium carbonate in the resin composition, thereby reducing the warm water resistance and moisture resistance. Total proportions of these components outside the above-specified range are therefore not desired.

The nucleating agent is added in a proportion of 0.01 - 0.5 wt.% based on the total amount of the components (a) - (e). If the proportion of the nucleating agent is smaller than 0.01 wt.%, the secondary shrinkage factor becomes significant. The above-described effects of the nucleating agent are not enhanced significantly if it is present in any proportions greater than 0.5 wt.%. Use of the nucleating agent in such an excess proportion results in a higher production cost. It is thus not desirable to use the nucleating agent in proportions outside the above-specified range. The addition of the nucleating agent can additionally improve the stiffness and scratch resistance of each composition.

As illustrative examples of the nucleating agent, may be mentioned metal salts of aromatic monocarboxylic acids such as benzoic acid, toluylic acid and p-tert-butylbenzoic acid, dibenzylidene-sorbitols such as 1,3·2,4-di(benzylidene)sorbitol, 1,3·2,4-di(p-methylbenzylidene)sorbitol and 1,3·2,4-di(p-ethylbenzylidene)-sorbitol, metal salts of aromatic phosphoric acid compounds such as sodium bis(4-tert-butylphenyl)-phosphate and sodium methylenebis(2,4-di-tert-butylphenol)phosphate. These nucleating agents may be used either singly or in combination.

In the present invention, it is possible to use either singly or in combination various additives such as antioxidants, lubricants, ultraviolet light absorbents, ultraviolet light stabilizers, heat stabilizers, antistatic agents, and organic and inorganic pigments. As illustrative examples of these various additives, may be mentioned those routinely incorporated in polyolefin resins. They may be used as desired, so long as the effects of this invention are not impaired intolerably. It is also feasible to use, in combination, a resin other than the polyolefin resins indispensable for the present invention and an inorganic filler other than the essential components c), d) and e) as needed.

The resin composition of this invention may be obtained usually by mixing the individual components in a mixer such as Henschel mixer in advance and then melting, kneading and pelletizing the resultant mixture by means of a single-screw or twin-screw extruder. The pellets can thereafter be processed further into final products by a desired molding method such as extrusion molding, injection molding, rotary molding or compression molding.

The present invention will hereinafter by described specifically in the following Examples and Comparative Examples, in which the following testing methods were followed:

| | |
|---|---|
| Melt index (MI) | ASTM D-1238 |
| Flexural modulus | ASTM D-790 |
| Flexural strength | ASTM D-790 |
| Izod impact strength | ASTM D-256 |
| Heat distortion temperature | ASTM D-648 |
| Linear expansion coefficient | ASTM D-696 |

Scratch resistance was judged visually by the following method.

Samples:

Embossed plates of 80 mm long x 160 mm wide x 2 mm thick (colored with 1 part by weight of a 5:1 mixed pigment of red iron oxide and carbon black).

Boss shape:

Oval. Raised boss area: about 3 mm². Depth: about 0.1 mm.

Measuring method:

A pencil hardness testing machine prescribed in JIS (Japanese Industrial Standards) K5401 was used. A 100-yen nickel coin was attached instead of a pencil and the surface of each of the above samples was scratched under a load of 1.5 kg. The degree of scratches was judged.

Standard of judgement:

◎ :     Absolutely no noticeable scratches.
O:     Practically no noticeable scratches.
Δ:     Some scratches observed.
X:     Scratches observed.

The evaluation of paintability was conducted by measuring the peel strength of test sample and the warm water resistance of another test sample, which had been obtained respectively by the following two coating methods of different kinds.

Coating method - A:

Using as a test piece a plate of 80 mm long, 240 mm wide and 2 mm thick obtained by an injection molding machine, a two-pack primer of the acrylic resin-chlorinated polypropylene type was coated to a coating film thickness of 15 μm and was then dried at 90°C for 30 minutes. In addition, a two-pack urethane topcoat was coated to a coating film thickness of about 100 μm and was then dried at 90°C for 40 minutes. The thus-coated plate was left over for further 48 hours at room temperature to obtain a test piece for paintability test (Test Piece A).

Coating method - B:

Test Piece B was obtained in the same manner as in the coating method - A except that a plasma treatment was applied under the following conditions instead applying the primer.

Conditions for the plasma treatment:

Apparatus:     Microwave plasma treatment apparatus manufactured by Toshiba Ccrporation, Model TMZ-2026M.

Treatment gas:     Oxygen.

6

| Treatment time: | 30 seconds. |
| Gas pressure: | 1.0 Torr (1.33 mbar) |
| Gas flow rate: | 480 cc/min. |
| Microwave output: | 1,500 W. |

Peel strength:

Cuts were formed by a cutter knife with intervals of 1.0 cm in the coating film of each of Test Pieces A and B obtained in the above-described manner. The coating films of Test Pieces A and B were then separately pulled off at a rate of 30 mm/min by an Instron tensile testing machine to measure the 180° peel strengths of the respective coating films.

Warm water resistance:

Test Pieces A and B obtained in the above-described manner were immersed for 240 hours in warm water of 40°C and the surface conditions of the respective coating films were observed.

O: Absolutely no blister or the like under coating film.
Δ: Some blisters or the like under coating film.
X: Many blisters under coating film.

Measuring method of secondary shrinkage factor:

Using a plate of 80 mm long, 240 mm wide and 3 mm thick obtained by injection molding, the distance (A) between reference lines was measured after allowing the plate to stand at 23°C for 24 hours after its molding. The plate was then placed for 14 hours in an atmosphere of 80°C and left over again at 23°C for 3 hours and the distance (B) between the reference lines was then measured. The value of secondary shrinkage factor was calculated in accordance with the following equation:

$$\textbf{Secondary shrinkage factor (\%)} = \frac{A - B}{A} \times 100$$

The following components were used in the Examples and Comparative Examples:

Component a):

Table 1

| | | Ethylene content (wt.%) | MI (g/10 min) |
|---|---|---|---|
| Example | PP-A | 6.8 | 12.0 |
| | PP-B | 13.8 | 22 |
| Comp. Ex. | PP-C | - | 8.0 |

Component b):

| | | Propylene content (wt.%) | Mooney viscosity ($ML_{1+4}^{100°C}$) |
|---|---|---|---|
| Example | EPR-A | 24 | 70 |
| | EPR-B | 50 | 27 |
| | EPR-C | 69 | 72 |
| | EPDM-A* | 27 | 88 |
| Comp. Ex. | EPR-D | 24 | 12 |

\* "EP 57P" (trade name, product of Japan Synthetic Rubber Co., Ltd., diene component: ethylidenenorbornane, iodine value: 15.0

Component c):

**Table 3**

| | | Surface treatment agent | | Treatment method |
|---|---|---|---|---|
| | | Kind | A.A.* | |
| Example | Talc A | Dimethylpolysiloxy-silazane | 1.0 | As described below |
| | Talc B | N,N-bis(2-hydroxy-ethyl)laurylamine | 1.0 | As described below |
| Comp. Ex. | Talc C | – | – | As described below |
| | Talc D | Dimethylpolysiloxy-silazane | 1.0 | As described below |

\* A.A. (amount added): part by weight per 100 parts by weight of talc.

Talc A:

In a fluidized-bed counter-jet mill "Model 400 AFG" manufactured by Alpine GmbH, West Germany, 100 parts by weight of talc having an average particle size of about 10 μm and an ordinary particle size distribution and 1.0 part by weight of dimethylpolysiloxysilazane were separately charged. Grinding and surface treatment were then performed under the following conditions to obtain surface-treated talc (Talc A).
Treatment conditions:
Air flow rate: 1620 m³/hr
Grinding pressure: 6 kg/cm²
(compressed air was used.)
Revolution speed of classifier: 4,000 rpm

Talc B:

N,N-bis(2-hydroxyethyl)laurylamine was used in place of dimethylpolysiloxysilazane in Talc A.

Talc C:

Grinding was only conducted without using any surface treatment agent.

Talc D:

In a Henschel mixer, 1.0 part by weight of dimethylpolysiloxysilazane and 100 parts by weight of Talc C were mixed.

Component d):

Precipitated barium sulfate having an average particle size of 0.8 $\mu$m.

Component e):

Table 4

| | | APS* ($\mu$m) | Aspect ratio | Remarks |
|---|---|---|---|---|
| Ex. | Calcium carbonate A | 1.5 | 7.5 | Light prismatic calcium carbonate |
| | Calcium carbonate B | 2.5 | 3.0 | Light acicular calcium carbonate |
| Comp. Ex. | Calcium carbonate C | 1.5 | 1.2 | Heavy calcium carbonate |

* Average particle size

Examples 1 - 9:

The components a) - e) were mixed in proportions shown in Table 5. Per 100 parts by weight of each of the resultant mixtures, were added 0.1 part by weight of aluminum p-tert-butylbenzoate (Nucleating Agent A), 0.05 part by weight of 2,6-di-tert-butyl-4-ethyl-phenol, 0.1 part by weight of calcium stearate and 0.1 part by weight of tetrakis[methylene-3-(3,5-di-tert-butyl-4-hydroxyphenyl)propionate]methane. After mixing them in a Henschel mixer, the thus-obtained mixture was pelletized at 210°C by means of a single-screw extruder having a barrel diameter of 40 mm. The resultant pellets were molded at 210°C by an injection molding machine into a test piece of prescribed shape and dimensions. Physical properties of respective test pieces were separately measured.
Results are shown in Table 5.

Example 10:

A test was conducted in the same manner as in Example 1 except that 1,3•2,4-di(p-ethylbenzylidene)-sorbitol (Nucleating Agent B) was added in a proportion given in Table 5. Results are shown in Table 5.

Example 11:

A test was conducted in the same manner as in Example 1 except that 10 parts by weight of EPDM-A were used in lieu of 10 parts by weight of EPR-A.
Results are shown in Table 5.

Comparative Examples 1 - 13:

Tests were separately conducted in the same manner as in Example 1 except that the kinds and proportions of the components a) - f) are changed as shown in Table 6. Results are also summarized in Table 6.

## Table 5

| Example | | | | 1 | 2 |
|---|---|---|---|---|---|
| Composition | Component a) | | wt.% | A/55 | A/60 |
| | Component b) | | | EPR-A/20 | EPR-A/20 |
| | Component c) | | | A/10 | A/10 |
| | Component d) | | | 10 | 10 |
| | Component e) | | | A/5 | A/5 |
| | Nucleating agents A/B | part by weight | | 0.1/0 | 0.1/0 |
| Physical property | MI | | g/10 min | 10.0 | 11.2 |
| | Flexural strength | | $kg/cm^2$ | 260 | 285 |
| | Flexural modulus | | $kg/cm^2$ | 16000 | 18500 |
| | Izod impact strength | 23°C | kg·cm/cm | NF* | NF* |
| | | -10°C | | 30.2 | 22.6 |
| | Heat distortion temperature | | $4.6kg/cm^2$ (°C) | 117 | 120 |
| Paintability | Peel strength | Method A | kg/cm | 1.0 | 0.95 |
| | | Method B | | 1.2 | 1.1 |
| | Warm water resistance | Method A | — | O | O |
| | | Method B | | O | O |
| Scratch resistance | | | — | O - ◎ | O - ◎ |
| Linear expansion coefficient (20°C - 80°C) | | | 1/°C | $0.65 \times 10^{-4}$ | $0.75 \times 10^{-4}$ |
| Secondary shrinkage factor | | | % | 0.20 | 0.20 |

* NF: Not fractured.

## Table 5 (Cont'd)

| | | Example | | 3 | 4 |
|---|---|---|---|---|---|
| Composition | | Component a) | wt.% | A/55 | A/50 |
| | | Component b) | | EPR-A/23 | EPR-A/23 |
| | | Component c) | | A/7 | A/12 |
| | | Component d) | | 10 | 8 |
| | | Component e) | | A/5 | A/7 |
| | Nucleating agents A/B | | part by weight | 0.1/0 | 0.1/0 |
| Physical property | MI | | g/10 min | 10.2 | 10.8 |
| | Flexural strength | | kg/cm$^2$ | 248 | 272 |
| | Flexural modulus | | kg/cm$^2$ | 14900 | 16200 |
| | Izod impact strength | 23°C | kg·cm/cm | NF* | NF* |
| | | -10°C | | 34.2 | 32.6 |
| | Heat distortion temperature | | 4.6kg/cm$^2$ (°C) | 115 | 117 |
| Paintability | Peel strength | Method A | kg/cm | 1.1 | 1.0 |
| | | Method B | | 1.2 | 1.1 |
| | Warm water resistance | Method A | – | O | O |
| | | Method B | | O | O |
| Scratch resistance | | | – | O – ◎ | O – ◎ |
| Linear expansion coefficient (20°C - 80°C) | | | 1/°C | 0.79x10$^{-4}$ | 0.67x10$^{-4}$ |
| Secondary shrinkage factor | | | % | 0.22 | 0.20 |

* NF: Not fractured.

## Table 5 (Cont'd)

| Example | | | 5 | 6 |
|---|---|---|---|---|
| Composition | Component a) | wt.% | A/55 | A/55 |
| | Component b) | | EPR-A/20 | EPR-A/20 |
| | Component c) | | B/10 | A/10 |
| | Component d) | | 10 | 10 |
| | Component e) | | A/5 | B/5 |
| | Nucleating agents A/B | part by weight | 0.1/0 | 0.1/0 |
| Physical property | MI | g/10 min | 9.8 | 10.3 |
| | Flexural strength | $kg/cm^2$ | 255 | 262 |
| | Flexural modulus | $kg/cm^2$ | 15800 | 16100 |
| | Izod impact strength | 23°C | $kg \cdot cm/cm$ | NF* | NF* |
| | | -10°C | | 29.7 | 29.4 |
| | Heat distortion temperature | $4.6kg/cm^2$ (°C) | 116 | 117 |
| Paintability | Peel strength | Method A | kg/cm | 1.0 | 1.0 |
| | | Method B | | 1.1 | 1.0 |
| | Warm water resistance | Method A | − | ○ | ○ |
| | | Method B | | ○ | ○ |
| Scratch resistance | | − | ○ - ◎ | ○ - ◎ |
| Linear expansion coefficient (20°C - 80°C) | | 1/°C | $0.69 \times 10^{-4}$ | $0.71 \times 10^{-4}$ |
| Secondary shrinkage factor | | % | 0.19 | 0.20 |

* NF: Not fractured.

Table 5 (Cont'd)

| Example | | | 7 | 8 |
|---|---|---|---|---|
| Composition | Component a) | wt.% | A/55 | A/55 |
| | Component b) | | EPR-B/20 | EPR-C/20 |
| | Component c) | | A/10 | A/10 |
| | Component d) | | 12 | 10 |
| | Component e) | | A/3 | A/5 |
| | Nucleating agents A/B | part by weight | 0.1/0 | 0.1/0 |
| Physical property | MI | g/10 min | 12.1 | 9.8 |
| | Flexural strength | $kg/cm^2$ | 257 | 255 |
| | Flexural modulus | $kg/cm^2$ | 15900 | 15800 |
| | Izod impact strength | 23°C | $kg \cdot cm/cm$ | NF* | NF* |
| | | -10°C | | 31.1 | 32.6 |
| | Heat distortion temperature | $4.6kg/cm^2$ (°C) | 117 | 116 |
| Paintability | Peel strength | Method A | kg/cm | 1.1 | 1.1 |
| | | Method B | | 1.1 | 1.2 |
| | Warm water resistance | Method A | — | ○ | ○ |
| | | Method B | | ○ | ○ |
| Scratch resistance | | — | ○ - ◎ | ○ - ◎ |
| Linear expansion coefficient (20°C - 80°C) | | 1/°C | $0.72 \times 10^{-4}$ | $0.64 \times 10^{-4}$ |
| Secondary shrinkage factor | | % | 0.21 | 0.18 |

* NF: Not fractured.

## Table 5  (Cont'd)

| Example | | | | 9 | 10 |
|---|---|---|---|---|---|
| Composition | Component a) | | wt.% | B/55 | A/55 |
| | Component b) | | | EPR-A/20 | EPR-A/20 |
| | Component c) | | | A/10 | A/10 |
| | Component d) | | | 10 | 10 |
| | Component e) | | | A/5 | A/5 |
| | Nucleating agents A/B | | part by weight | 0.1/0 | 0.1/0.3 |
| Physical property | MI | | g/10 min | 17.2 | 10.0 |
| | Flexural strength | | kg/cm$^2$ | 262 | 263 |
| | Flexural modulus | | kg/cm$^2$ | 16100 | 16300 |
| | Izod impact strength | 23°C | kg·cm/cm | NF* | NF* |
| | | -10°C | | 28.5 | 28.2 |
| | Heat distortion temperature | | 4.6kg/cm$^2$ (°C) | 118 | 119 |
| Paintability | Peel strength | Method A | kg/cm | 1.0 | 1.0 |
| | | Method B | | 1.1 | 1.2 |
| | Warm water resistance | Method A | — | O | O |
| | | Method B | | O | O |
| Scratch resistance | | | — | O - ◎ | ◎ |
| Linear expansion coefficient (20°C - 80°C) | | | 1/°C | 0.67x10$^{-4}$ | 0.63x10$^{-4}$ |
| Secondary shrinkage factor | | | % | 0.19 | 0.17 |

* NF: Not fractured.

14

## Table 5 (Cont'd)

| Example | | | 11 |
|---|---|---|---|
| Composition | Component a) | wt.% | A/55 |
| | Component b) | | EPR-A 10/EPDM-A 10 |
| | Component c) | | A/10 |
| | Component d) | | 10 |
| | Component e) | | A/5 |
| | Nucleating agents A/B | part by weight | 0.1/0 |
| Physical property | MI | g/10 min | 9.8 |
| | Flexural strength | $kg/cm^2$ | 261 |
| | Flexural modulus | $kg/cm^2$ | 16100 |
| | Izod impact strength 23°C | kg·cm/cm | NF* |
| | Izod impact strength -10°C | | 29.8 |
| | Heat distortion temperature | $4.6kg/cm^2$ (°C) | 117 |
| Paintability | Peel strength Method A | kg/cm | 1.1 |
| | Peel strength Method B | | 1.2 |
| | Warm water resistance Method A | — | O |
| | Warm water resistance Method B | | O |
| Scratch resistance | | — | ◎ |
| Linear expansion coefficient (20°C – 80°C) | | 1/°C | $0.68 \times 10^{-4}$ |
| Secondary shrinkage factor | | % | 0.19 |

* NF: Not fractured.

## Table 6

| Comparative Example | | | 1 | 2 |
|---|---|---|---|---|
| Composition | Component a) | wt.% | A/35 | A/50 |
| | Component b) | | EPR-A/40 | EPR-A/20 |
| | Component c) | | A/10 | A/15 |
| | Component d) | | 10 | 10 |
| | Component e) | | A/5 | 0 |
| | Nucleating Agent A | | 0.1 | 0.1 |
| Physical property | MI | g/10 min | 7.2 | 11.7 |
| | Flexural strength | $kg/cm^2$ | 150 | 290 |
| | Flexural modulus | $kg/cm^2$ | 8300 | 19500 |
| | Izod impact strength | 23°C | $kg \cdot cm/cm$ | NF* | NF* |
| | | -10°C | | NF* | 22.2 |
| | Heat distortion temperature | $4.6kg/cm^2$ (°C) | 82 | 120 |
| Paintability | Peel strength | Method A | kg/cm | 1.2 | 1.1 |
| | | Method B | | 1.4 | 1.2 |
| | Warm water resistance | Method A | — | O | O |
| | | Method B | | O | O |
| Scratch resistance | | — | X | Δ |
| Linear expansion coefficient (20°C - 80°C) | | 1/°C | $0.62 \times 10^{-4}$ | $0.82 \times 10^{-4}$ |
| Secondary shrinkage factor | | % | 0.19 | 0.22 |

* NF: Not fractured.

## Table 6 (Cont'd)

| Comparative Example | | | 3 | 4 |
|---|---|---|---|---|
| Composition | Component a) | wt.% | A/55 | A/50 |
| | Component b) | | EPR-A/20 | EPR-A/20 |
| | Component c) | | A/1 | A/14 |
| | Component d) | | 14 | 1 |
| | Component e) | | A/10 | A/10 |
| | Nucleating Agent A | | 0.1 | 0.1 |
| Physical property | MI | g/10 min | 12.2 | 11.2 |
| | Flexural strength | $kg/cm^2$ | 210 | 288 |
| | Flexural modulus | $kg/cm^2$ | 10600 | 18600 |
| | Izod impact strength | 23°C | $kg \cdot cm/cm$ | NF* | 25.2 |
| | | -10°C | | NF* | 7.9 |
| | Heat distortion temperature | $4.6kg/cm^2$ (°C) | 102 | 120 |
| Paintability | Peel strength | Method A | kg/cm | 1.0 | 1.1 |
| | | Method B | | 1.1 | 1.2 |
| | Warm water resistance | Method A | — | O | O |
| | | Method B | | O | O |
| Scratch resistance | | — | Δ | O |
| Linear expansion coefficient (20°C – 80°C) | | 1/°C | $0.78 \times 10^{-4}$ | $0.71 \times 10^{-4}$ |
| Secondary shrinkage factor | | % | 0.21 | 0.20 |

* NF: Not fractured.

## Table 6 (Cont'd)

| Comparative Example | | | | 5 | 6 |
|---|---|---|---|---|---|
| Composition | Component a) | | wt.% | A/76 | A/40 |
| | Component b) | | | EPR-A/20 | EPR-A/20 |
| | Component c) | | | A/2 | A/20 |
| | Component d) | | | 1 | 15 |
| | Component e) | | | A/1 | A/7 |
| | Nucleating Agent A | | | 0.1 | 0.1 |
| Physical property | MI | | g/10 min | 11.6 | 7.8 |
| | Flexural strength | | $kg/cm^2$ | 202 | 348 |
| | Flexural modulus | | $kg/cm^2$ | 8200 | 24000 |
| | Izod impact strength | 23°C | kg·cm/cm | NF* | 19.7 |
| | | -10°C | | NF* | 5.4 |
| | Heat distortion temperature | | $4.6kg/cm^2$ (°C) | 99 | 123 |
| Paintability | Peel strength | Method A | kg/cm | 1.1 | 0.5 |
| | | Method B | | 1.1 | 0.6 |
| | Warm water resistance | Method A | – | O | X |
| | | Method B | | O | X |
| Scratch resistance | | | – | X | ◎ |
| Linear expansion coefficient (20°C – 80°C) | | | 1/°C | $0.71 \times 10^{-4}$ | $1.2 \times 10^{-4}$ |
| Secondary shrinkage factor | | | % | 0.28 | 0.16 |

* NF: Not fractured.

EP 0 265 075 B1

<u>Table 6 (Cont'd)</u>

| Comparative Example | | | 7 | 8 |
|---|---|---|---|---|
| Composition | Component a) | wt.% | C/55 | A/55 |
| | Component b) | | EPR-A/20 | EPR-D/20 |
| | Component c) | | A/10 | A/10 |
| | Component d) | | 10 | 10 |
| | Component e) | | A/5 | A/5 |
| | Nucleating Agent A | | 0.1 | 0.1 |
| Physical property | MI | g/10 min | 7.5 | 14.2 |
| | Flexural strength | $kg/cm^2$ | 270 | 250 |
| | Flexural modulus | $kg/cm^2$ | 17000 | 15000 |
| | Izod impact strength | 23°C | $kg \cdot cm/cm$ | NF* | NF* |
| | | -10°C | | 7.0 | 27.2 |
| | Heat distortion temperature | $4.6kg/cm^2$ (°C) | 119 | 116 |
| Paintability | Peel strength | Method A | kg/cm | 0.8 | 0.4 |
| | | Method B | | 0.8 | 0.5 |
| | Warm water resistance | Method A | – | ○ | ○ |
| | | Method B | | ○ | ○ |
| Scratch resistance | | – | ○ - ◎ | Δ |
| Linear expansion coefficient (20°C – 80°C) | | 1/°C | $0.58 \times 10^{-4}$ | $0.68 \times 10^{-4}$ |
| Secondary shrinkage factor | | % | 0.19 | 0.20 |

\* NF: Not fractured.

19

## Table 6 (Cont'd)

| Comparative Example | | | 9 | 10 |
|---|---|---|---|---|
| Composition | Component a) | wt.% | A/55 | A/55 |
| | Component b) | | EPR-A/20 | EPR-A/20 |
| | Component c) | | C/10 | A/10 |
| | Component d) | | 10 | 10 |
| | Component e) | | A/5 | C/5 |
| | Nucleating Agent A | | 0.1 | 0.1 |
| Physical property | MI | g/10 min | 11.6 | 11.1 |
| | Flexural strength | $kg/cm^2$ | 250 | 260 |
| | Flexural modulus | $kg/cm^2$ | 15000 | 14600 |
| | Izod impact strength | 23°C | $kg \cdot cm/cm$ | NF* | NF* |
| | | -10°C | | 22.2 | 20.6 |
| | Heat distortion temperature | $4.6kg/cm^2$ (°C) | 116 | 115 |
| Paintability | Peel strength | Method A | kg/cm | 1.1 | 1.0 |
| | | Method B | | 1.1 | 1.1 |
| | Warm water resistance | Method A | — | O | O |
| | | Method B | | O | O |
| Scratch resistance | | — | Δ | O – ◎ |
| Linear expansion coefficient (20°C – 80°C) | | 1/°C | $0.67 \times 10^{-4}$ | $1.08 \times 10^{-4}$ |
| Secondary shrinkage factor | | % | 0.20 | 0.21 |

* NF: Not fractured.

Table 6  (Cont'd)

| Comparative Example | | | 11 | 12 |
|---|---|---|---|---|
| Composition | Component a) | wt.% | A/55 | A/55 |
| | Component b) | | EPR-A/20 | EPR-A/20 |
| | Component c) | | D/10 | A/10 |
| | Component d) | | 10 | 10 |
| | Component e) | | A/5 | A/5 |
| | Nucleating Agent A | | 0.1 | - |
| Physical property | MI | g/10 min | 9.8 | 11.0 |
| | Flexural strength | kg/cm$^2$ | 254 | 250 |
| | Flexural modulus | kg/cm$^2$ | 15600 | 15200 |
| | Izod impact strength | 23°C | kg·cm/cm | NF* | NF* |
| | | -10°C | | 20.8 | 32.5 |
| | Heat distortion temperature | 4.6kg/cm$^2$ (°C) | 117 | 114 |
| Paintability | Peel strength | Method A | kg/cm | 1.0 | 1.0 |
| | | Method B | | 1.2 | 1.2 |
| | Warm water resistance | Method A | - | O - Δ | O |
| | | Method B | | O | O |
| Scratch resistance | | - | Δ | Δ |
| Linear expansion coefficient (20°C - 80°C) | | 1/°C | 0.62x10$^{-4}$ | 0.85x10$^{-4}$ |
| Secondary shrinkage factor | | % | 0.20 | 0.33 |

* NF: Not fractured.

## Table 6 (Cont'd)

| Comparative Example | | | 13 |
|---|---|---|---|
| Composition | Component a) | wt.% | A/55 |
| | Component b) | | EPR-A/20 |
| | Component c) | | A/10 |
| | Component d) | | 10 |
| | Component e) | | A/5 |
| | Nucleating Agent A | | 0.005 |
| Physical property | MI | g/10 min | 10.8 |
| | Flexural strength | $kg/cm^2$ | 253 |
| | Flexural modulus | $kg/cm^2$ | 15400 |
| | Izod impact strength | 23°C | $kg \cdot cm/cm$ | NF* |
| | | -10°C | | 31.2 |
| | Heat distortion temperature | $4.6kg/cm^2$ (°C) | 115 |
| Paintability | Peel strength | Method A | kg/cm | 1.0 |
| | | Method B | | 1.1 |
| | Warm water resistance | Method A | — | O |
| | | Method B | | O |
| Scratch resistance | | — | Δ - O |
| Linear expansion coefficient (20°C - 80°C) | | 1/°C | $0.78 \times 10^{-4}$ |
| Secondary shrinkage factor | | % | 0.30 |

* NF: Not fractured.

As apparent from the above Examples and Comparative Examples, the polypropylene resin composition of this invention has well-balanced good physical properties of high stiffness and high impact resistance, excellent paintability and moldability, small linear expansion coefficient and secondary shrinkage factor and good scratch resistance. It is hence suitable for large exterior automotive parts such as fenders, side trimmings and bumpers.

## Claims

1. A polypropylene resin composition comprising:
   (a) 40 - 80 wt.% of a crystalline ethylene-propylene block copolymer having an ethylene content of 3 - 30 wt.% and a melt flow index (MI) of at least 4 g/10 min at 230° C;

EP 0 265 075 B1

(b) 30 - 10 wt.% of an ethylenepropylene copolymer rubber and/or an ethylene-propylene-diene terpolymer rubber, each of said former and/or latter rubbers having a propylene content of 10 - 90 wt.% and a Mooney viscosity

$$(ML_{1+4}^{100°C})$$

of 15 - 110;

(c) 2 - 25 wt.% of talc which has been treated with a surface treatment agent and which has been pulverized in a dry or semi-dry grinding mill;

(d) 2 - 25 wt.% of barium sulfate having an average particle size not greater than 1 $\mu$m;

(e) 1 - 10 wt.% of prismatic or acicular calcium carbonate having an average particle size not greater than 5 $\mu$m and an aspect ratio of at least 2.5; and

(f) 0.01 - 0.5 wt.% of a nucleating agent;

all the weight percentages being based on the total amount of the components (a) - (e) and the total amount of talc, barium sulfate and calcium carbonate being 5 - 35 wt.% of the total amount of the components (a) - (e).

2. The resin composition according to claim 1, wherein the proportion of the surface treatment agent is 0.01 - 5 parts by weight per 100 parts by weight of the talc.

3. The resin composition according to claim 1 or claim 2, wherein the surface treated talc is obtained by a jet-stream type pulverizing means, e.g. of the fluidized bed type.

4. The resin composition according to claim 1, 2 or 3, wherein the component (e) is calcium carbonate surface-treated with a surface treatment agent.

5. The resin composition according to claim 1, 2, 3 or 4, wherein the nucleating agent is at least one compound selected from metal salts of aromatic monocarboxylic acids, dibenzylidenesorbitols and metal salts of aromatic phosphoric acid compounds.

6. The resin composition according to claim 5, wherein the nucleating agent is a metal benzoate, toluylate or p-tert-butylbenzoate.

7. The resin composition according to claim 5, wherein the nucleating agent is 1,3•2,4-di(benzylidene)-sorbitol, 1,3•2,4-di(p-methylbenzylidene)sorbitol or 1,3•2,4-di(p-ethylbenzylidene)sorbitol.

8. The resin composition according to claim 5, wherein the nucleating agent is sodium bis(4-tert-butylphenyl)phosphate or sodium methylenebis(2,4-di-tert-butylphenol)phosphate.

9. The resin composition according to any of claims 1 to 8, which further comprises at least one additive selected from antioxidants, lubricants, ultraviolet light absorbents, ultraviolet light stabilizers, heat stabilizers, antistatic agents, organic pigments and inorganic pigments.

10. A method of making the composition according to claim 1, wherein component (c) is prepared by pulverizing the talc in a dry or semi-dry condition in a jet stream pulverizer, e.g. of the fluidized bed type, with a surface treatment agent and the resulting material is combined with the components (a), (b) and (d) to (f) in accordance with claim 1.

**Revendications**

1. Une composition de résine de polypropylène comprenant :

(a) 40 à 80 % en poids d'un copolymère séquencé cristallin d'éthylène-propylène ayant une teneur en éthylène de 3 à 30 % en poids et un indice de fluidité (IF) d'au moins 4 g/10 min à 230°C ;

(b) 30 à 10 % en poids d'un caoutchouc copolymère d'éthylène-propylène et/ou d'un caoutchouc terpolymère d'éthylène-propylène-diène, chacun dudit premier et/ou second caoutchoucs ayant une teneur en propylène de 10 à 90 % en poids et une consistance Mooney

23

EP 0 265 075 B1

$$(ML_{1+4}^{100°C})$$

de 15 à 110 ;

(c) 2 à 25 % en poids de talc que l'on a traité avec un agent de traitement de surface et que l'on a pulvérisé dans un broyeur à sec ou semi à sec ;

(d) 2 à 25 % en poids de sulfate de baryum ayant une granulométrie moyenne ne dépassant pas 1 $\mu$m ;

(e) 1 à 10 % en poids de carbonate de calcium prismatique ou aciculaire ayant une granulométrie moyenne ne dépassant pas 5 $\mu$m et un allongement d'au moins 2,5 ; et

(f) 0,01 à 0,5 % en poids d'un agent de nucléation ;

tous les pourcentages en poids étant relatifs à la quantité totale des composants (a) à (e) et la proportion totale de talc, de sulfate de baryum et de carbonate de calcium étant de 5 à 35 % en poids relativement à la quantité totale des composants (a) à (e).

2. La composition de résine selon la revendication 1, dans laquelle la proportion de l'agent de traitement de surface est de 0,01 à 5 parties en poids pour 100 parties en poids du talc.

3. La composition de résine selon la revendication 1 ou la revendication 2, dans laquelle le talc traité en surface est obtenu avec un dispositif de pulvérisation de type courant-jet, par exemple du type à lit fluidisé.

4. La composition de résine selon la revendication 1, 2 ou 3, dans laquelle le composant (e) est du carbonate de calcium traité en surface avec un agent de traitement de surface.

5. La composition de résine selon la revendication 1, 2, 3 ou 4, dans laquelle l'agent de nucléation est au moins un composé choisi parmi les sels métalliques des acides monocarboxyliques aromatiques, les dibenzylidènesorbitols et les sels métalliques des dérivés aromatiques de l'acide phosphorique.

6. La composition de résine selon la revendication 5, dans laquelle l'agent de nucléation est un benzoate, toluylate ou p-tert-butylbenzoate métallique.

7. La composition de résine selon la revendication 5, dans laquelle l'agent de nucléation est le 1,3·2,4-di-(benzylidène) sorbitol, le 1,3·2,4-di(p-méthylbenzylidène)sorbitol ou le 1,3·2,4-di(p-éthylbenzylidène)-sorbitol.

8. La composition de résine selon la revendication 5, dans laquelle l'agent de nucléation est le bis(4-tert-butylphényl) phosphate de sodium ou le méthylène-bis(2,4-di-tert-butylphénol) phosphate de sodium.

9. La composition de résine selon l'une quelconque des revendications 1 à 8, qui comprend de plus au moins un additif choisi parmi les antioxydants, les lubrifiants, les absorbants de la lumière ultraviolette, les stabilisants vis-à-vis de la lumière ultraviolette, les stabilisants thermiques, les agents antistatiques, les pigments organiques et les pigments minéraux.

10. Un procédé pour la préparation de la composition selon la revendication 1, dans lequel on prépare le composant (c) par pulvérisation du talc à l'état sec ou semi-sec dans un pulvérisateur à courant-jet, par exemple du type à lit fluidisé, avec un agent de traitement de surface, et on combine la matière obtenue avec les composants (a), (b) et (d) à (f) selon la revendication 1.

**Patentansprüche**

1. Polypropylenharz-Zusammensetzung, enthaltend:

(a) 40-80 Gew.-% eines kristallinen Ethylen-Propylen-Block-Copolymerisats mit einem Ethylengehalt von 3-30 Gew.-% und einem Schmelzfließindex (MI) von wenigstens 4g/10min. bei 230° C;

(b) 30-10 Gew.-% eines Ethylen-Propylen-Copolymerkautschuks und/oder eines Ethylen-Propylen-Dien-Terpolymerkautschuks, wobei jeweils die erstgenannten und/oder letztgenannten Kautschuke einen Propylengehalt von 10 - 90 Gew.-% und eine Mooney-Viskosität

24

$$(ML^{\; 100^\circ C})$$
$$1+4$$

von 15-100 hat;

(c) 2-25 Gew.-% eines Talks, der mit einem Oberflächenbehandlungsmittel behandelt wurde und in einer trockenen oder halbtrockenen Mahlmühle pulverisiert wurde;

(d) 2-25 Gew.-% Bariumsulfat mit einer durchschnittlichen Teilchengröße von nicht mehr als 1 $\mu$m;

(e) 1-10 Gew.-% eines prismatischen oder nadelförmigen Calciumcarbonats mit einer durchschnittlichen Teilchengröße von nicht mehr als 5 $\mu$m und einem Flächenstreckenverhältnis von wenigstens 2,5; und

(f) 0,01 - 0,5 Gew.-% eines kernbildenden Mittels; wobei alle Gewichtsprozentsätze auf die Gesamtmenge der Komponenten (a) bis (c) bezogen sind und die Gesamtmenge Talk, Bariumsulfat und Calciumcarbonat 5-35 Gew.-% der Gesamtmenge der Komponenten (a) - (e) beträgt.

2. Harzzusammensetzung nach Anspruch 1, worin das Mengenverhältnis des Oberflächenbehandlungsmittels zum Talk 0,01 bis 5 Gewichtsteile je 100 Gewichtsteile Talk beträgt.

3. Harzzusammensetzung nach Anspruch 1 oder 2, wobei der oberflächenbehandelte Talk durch eine mit einem Düsenstrom arbeitende.Pulverisiervorrichtung, z.B. vom Typ des Fließbetts, erhalten wird.

4. Harzzusammensetzung nach Anspruch 1, 2 oder 3, wobei die Komponente (e) Calciumcarbonat ist, dessen Oberfläche mit einem Oberflächenbehandlungsmittel behandelt worden ist.

5. Harzzusammensetzung nach Anspruch 1, 2, 3 oder 4, wobei das kernbildende Mittel wenigstens eine Verbindung, ausgewählt aus Metallsalzen von aromatischen Monocarbonsäuren, Dibenzylidensorbitolen und Metallsalzen von aromatischen Phosphorsäureverbindungen, ist.

6. Harzzusammensetzung nach Anspruch 5, wobei das kernbildende Mittel ein Metallbenzoat, -toluylat oder -p-tert.-butylbenzoat ist.

7. Harzzusammensetzung nach Anspruch 5, wobei das kernbildende Mittel 1, 3 $\cdot$ 2,4-Di(benzyliden)-sorbitol, 1,3 2,4-Di(p-methylbenzyliden)sorbitol oder 1,3 $\cdot$ 2,4-Di(p-ethylbenzyliden)sorbitol ist.

8. Harzzusammensetzung nach Anspruch 5, wobei das kernbildende Mittel Natrium-bis (4-tert-butylphenyl)phosphat oder Natriummethylen bis(2,4-di-tert-butylphenol)phosphat ist.

9. Harzzusammensetzung nach einem der Ansprüche 1 bis 8, weiter enthaltend wenigstens einen Zusatz ausgewählt aus Antioxydantien, Schmiermitteln, Ultraviolettlichtabsorbern, Ultraviolettlichtstabilisatoren, Wärmestabilisatoren, antistatischen Mitteln, organischen Pigmenten und anorganischen Pigmenten.

10. Verfahren zum Herstellen der Zusammensetzung nach Anspruch 1, wobei die Komponente (c) durch Pulverisieren des Talks in trockenem oder halbtrockenem Zustand in einem Düsenstrompulverisierer, z.B. vom Fließbettyp, mit einem Oberflächenbehandlungsmittel hergestellt wurde und das erhaltene Material mit den Komponenten (a), (b) und (d) bis (f) gemäß Anspruch 1 kombiniert wird.